# EUROPÄISCHE PATENTSCHRIFT

(11) **EP 2 902 653 B1**
(45) Veröffentlichungstag und Bekanntmachung des Hinweises auf die Patenterteilung: **30.05.2018**
(21) Anmeldenummer: 15152567.2
(22) Anmeldetag: 26.01.2015
(51) Int. Cl.: F16D 55/225

(54) **Durch Gießen hergestellter Bremsträger**
Brake carrier produced by casting
Support de frein fabriqué par coulage

(30) Priorität: 29.01.2014 DE 102014101083
(43) Veröffentlichungstag der Anmeldung: 05.08.2015
(73) Patentinhaber: KNORR-BREMSE Systeme für Nutzfahrzeuge GmbH, 80809 München (DE)
(72) Erfinder: Heindl, Martin, 94535 Eging am See (DE); Roth, Nathalie, 94474 Vilshofen (DE)

(56) Entgegenhaltungen:
- DE-A1-102007 024 204
- DE-A1-102007 057 992
- US-A1- 2014 000 991

## Beschreibung

Die Erfindung betrifft einen insbesondere im Gussverfahren hergestellten Bremsträger für eine Scheibenbremse nach dem Oberbegriff des Anspruchs 1.

Ein derartiger Bremsträger, wie er aus der US 2014/0 000 991 A1 bekannt ist, dient der Befestigung eines Bremssattels einer Scheibenbremse, insbesondere eines Schiebesattels an einem Fahrzeug, vorzugsweise einem Nutzfahrzeug. Dabei ist der Bremsträger ortsfest am Fahrzeug gehalten und so ausgebildet, dass in ihm zwei Bremsbeläge positioniert sind, die bei einer Bremsung gegen eine an einer fahrzeugseitigen Radnabe befestigte rotierende Bremsscheibe gepresst werden.

In Umfangsrichtung der Bremsscheibe weist der Bremsträger, jeweils einander gegenüberliegende, ein Widerlager bildende Bremsträgerhörner auf, an denen der jeweilige Bremsbelag anliegt.

Zwischen den positionierten Bremsbelägen, die am Grund eines gebildeten und seitlich durch die Bremsträgerhörner begrenzten Belagschachtes anliegen, ist also die Bremsscheibe platziert und zwar mit geringem Abstand zu den Bremsbelägen, dem sogenannten Lüftspiel.

Der Grund des jeweiligen Belagschachtes wird durch eine Seite einer Strebe gebildet, die die sich gegenüberliegenden, einem Bremsbelag zugeordneten Bremsträgerhörner miteinander verbindet.

Die Fertigung des Bremsträgers erfolgt, gemäß der Gattung, im Gießverfahren, wozu eine geteilte Form zum Einsatz kommt, mit einem jeweils von einer Modellhälfte geformten Bett.

Durch die Formteilung bildet sich am Bremsträger ein beidseitig gegenüber der Wandung vorstehender Formteilungsgrat heraus, der insbesondere in den Übergangsbereichen der Bremsträgerhörner zu den Streben, die quasi die engste Stelle des Scheibenschachtes bilden, inakzeptabel ist.

Insbesondere zur Ausbildung einer ausreichenden Abstützfläche für die Bremsbeläge einerseits und zur vollständigen Nutzung der Dicke eines Reibbelages bei optimiertem Spiel zwischen der Bremsscheibe und dem Bremsträger, ist eine plane Ausbildung der Wandungen des Scheibenschachtes in dem genannten Bereich zwingend.

Hierzu sind spanende Bearbeitungen der Scheibenschachtwände notwendig, beispielsweise Stanzen oder Schleifen, um den Formteilungsgrat zu entfernen und die geforderten engen Toleranzen des Scheibenschachtes einzuhalten bzw. zu erreichen. In der genannten US 2014/0 000 991 A1 weisen die Streben bearbeitete Auflager für die Bremsbeläge auf, die auch auf der der Bremsscheibe zugewandten Seite zur Entfernung des Formteilungsgrates bearbeitet sind.

Naturgemäß ist dies nur mit einem entsprechenden Fertigungsaufwand möglich, der die Herstellungskosten des Bremsträgers nachteilig beeinflusst. Dieser Umstand stellt sich insoweit als nicht hinnehmbar dar, als Bremsträger in großen Stückzahlen hergestellt und eingesetzt werden.

Um die Ausbildung eines störenden Formteilungsgrates bei einem Gussbauteil für ein Fahrzeug zu vermeiden, wird in der DE 10 2007 024 204 A1 vorgeschlagen, an einer Außenseite des Gussteiles in dem den Formteilungsgrat bildenden Trennbereich einen gestuften Bereich mit einem Niveauversatz auszubilden.

Der Erfindung liegt die Aufgabe zugrunde, einen Bremsträger der gattungsgemäßen Art so weiterzuentwickeln, dass er einfacher und kostengünstiger herstellbar ist.

Diese Aufgabe wird durch einen Bremsträger mit den Merkmalen des Anspruchs 1 gelöst.

Die Erfindung schafft nun die Möglichkeit auf eine Weiterbearbeitung des Bremsträgers zur Entfernung des Formteilungsgrates zu verzichten. D.h., der Bremsträger kann insoweit zumindest unbearbeitet eingesetzt werden, was zu einer nicht unerheblichen Kosteneinsparung führt.

Dabei bleibt zwar der Formteilungsgrat erhalten, jedoch ist er nun in einem Bereich ausgebildet, in dem er die Maßhaltigkeit des Scheibenschachtes an seinen schmalsten Stellen nicht beeinflusst.

Gemäß der Erfindung ist vorgesehen, den Formteilungsgrat fluchtend oder zurückgesetzt zur angrenzenden Wandung des Scheibenschachtes auszubilden, so dass sich insgesamt eine plane Fläche ergibt. Vorgegebene Toleranzen können problemlos und ohne zusätzliche Bearbeitung eingehalten werden.

Die seitliche Vertiefung im Bremsträger, in die der jeweilige Formteilungsgrat ragt, ist im Übergangsbereich des jeweiligen Bremsträgerhorns zur Strebe vorgesehen und durch eine entsprechende Formgebung des Modells beim Gießen eingebracht.

Da außer einer Änderung der Modellgeometrie keine weiteren fertigungstechnischen Maßnahmen erforderlich sind, gestaltet sich die Herstellung des neuen Bremsträgers in gießtechnischer Hinsicht kostenneutral.

Die Einsparung einer nachfolgenden spanenden Bearbeitung zum Abtrag des Formteilungsgrates führt jedoch zu einer durchaus bemerkenswerten Kostenreduzierung und damit zu einer Kostenoptimierung der Herstellungskosten des Bremsträgers insgesamt.

Ein weiterer Gedanke der Erfindung sieht vor, die Vertiefung unmittelbar an die Formteilung angrenzen zu lassen, wobei der jeweilige Formteilungsgrat unter Ausbildung einer Kehle in die Vertiefung ragt und zwar sowohl seitlich wie auch, ausgehend von der Wandung des Scheibenschachtes nach unten. Dabei ist die Ortsbestimmung "unten" zu verstehen als die der Aufstandsfläche der Strebe für den Bremsbelag gegenüberliegende Seite der Strebe.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen erfindungsgemäße Bremsträger in einer perspektivischen Ansicht
- Figur 2: einen Teilausschnitt des Bremsträgers in einer Unteransicht
- Figur 3: eine geschnittene Seitenansicht, entsprechend der Linie III-III in Figur 1 in vergrößerter Darstellung
- Figur 4: die Ansicht nach Figur 3 unmittelbar vor Entformung des Bremsträgers
- Figur 5: einen Querschnitt durch einen Bremsträger nach dem Stand der Technik.

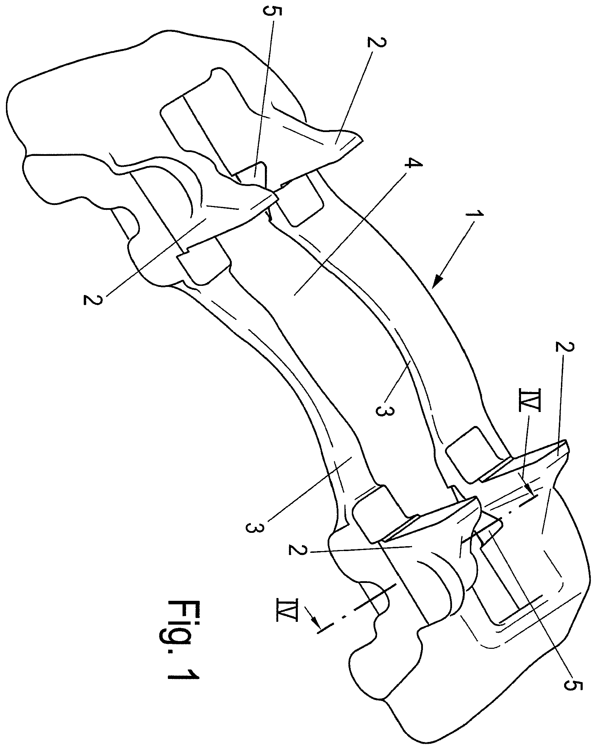

In der Figur 1 ist ein an einer Achse eines Kraftfahrzeuges, insbesondere eines Nutzfahrzeuges, befestigbarer Bremsträger 1 dargestellt, der zwei parallel und abständig zueinander verlaufende Streben 3 aufweist. Denkbar ist auch, lediglich eine oder keine Strebe vorzusehen.

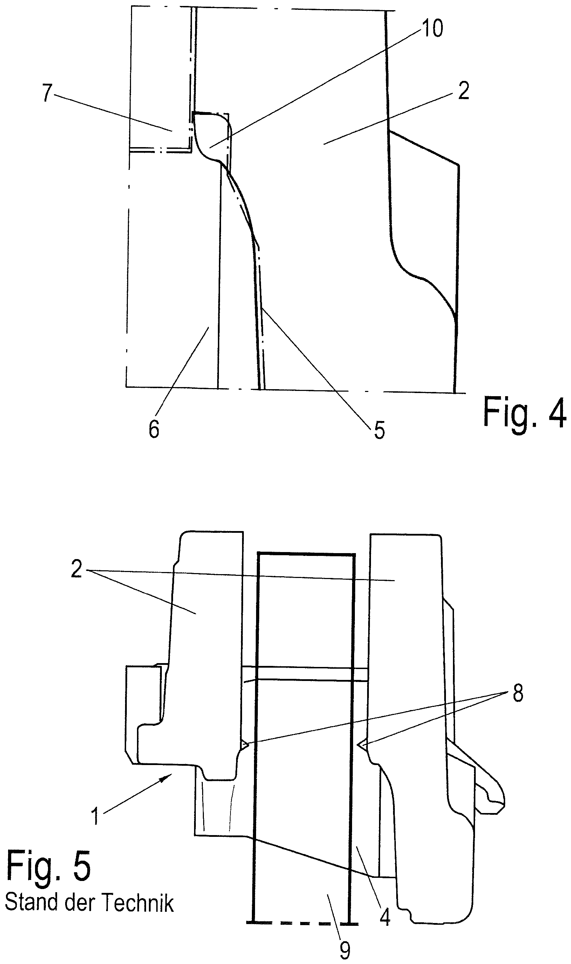

Diese Streben 3 verbinden jeweils zwei sich gegenüberliegende Bremsträgerhörner 2, die eine seitliche Begrenzung für einen eingesetzten, nicht dargestellten Bremsbelag bilden, der auf der jeweiligen Strebe 3 aufliegt, wobei die jeder Strebe 3 zugeordneten Bremsträgerhörner 2 sich in Umfangsrichtung einer einen Scheibenschacht 4 des Bremsträgers 1 durchtretenden Bremsscheibe 9 (Fig. 5) gegenüberliegen.

Der Bremsträger 1 wird durch Gießen hergestellt, üblicherweise im Gussverfahren mit zwei Formteilen und den Scheibenschacht 4 ausbildenden, strichpunktiert dargestellten erhabenen Teilen 6, 7 (Fig. 4) der Formbetten.

Dabei entsteht ein Formteilungsgrat 8, der bei einem Bremsträger nach dem Stand der Technik, wie er in der Figur 5 erkennbar ist, nach innen in den Scheibenschacht 4 vorsteht und zwar beidseitig, auf dem in Längsrichtung der Bremsscheibe 9 einander gegenüberliegenden Seiten der Bremsträgerhörner 2.

Wie bereits zum Stand der Technik beschrieben, ist die Bremsscheibe 9 mit geringem seitlichem Spiel im Scheibenschacht 4 gelagert, so dass nach einem Entkernen des Bremsträgers 1 der Formteilungsgrat 8 mechanisch, d.h. spangebend, entfernt muss.

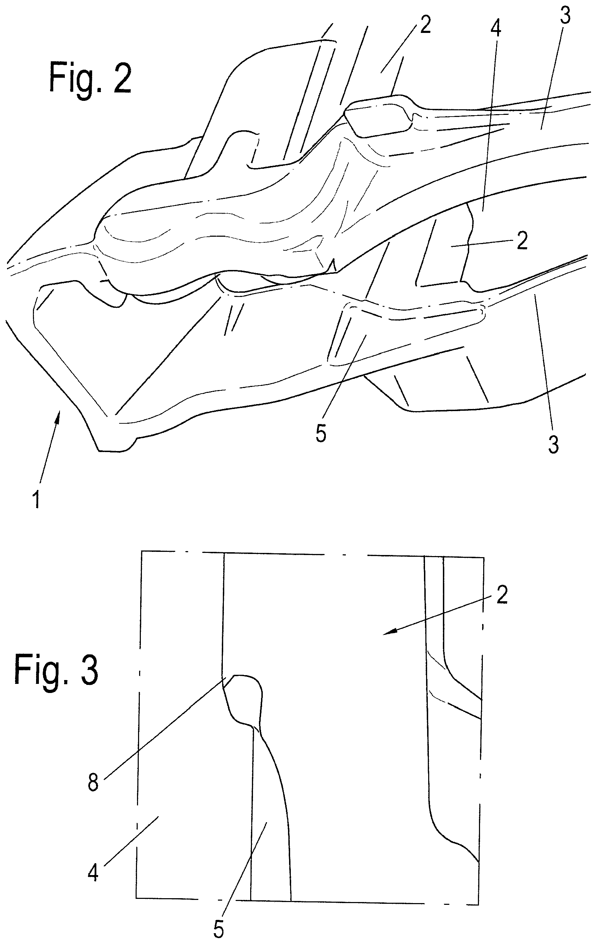

Gemäß der Erfindung ist jeder Formteilungsgrat 8 in einer seitlichen Vertiefung 5 der Bremsträgerhörner 2, übergehend in die Streben 3 ausgebildet, wie dies besonders deutlich in der Figur 3 erkennbar ist.

Dabei ragt der Formteilungsgrat 8 nicht mehr in den Scheibenschacht 4, sondern verläuft fluchtend zur zugeordneten Wandung des Bremsträgerhorns 2.

Die Formgebung der Vertiefung 5 erfolgt durch eine entsprechende Ausbildung des dafür modifizierten erhabenen Teiles 6, wie in der Figur 4 deutlich zu erkennen ist.

Hierbei weist der Teil 6 einen im Bereich des auszubildenden Formteilungsgrats 8 in Richtung des anderen Teils 7 vorstehenden Steg 10 auf, der vom Teil 7 überdeckt ist.

Die Vertiefungen 5 sind auf der dem jeweils zugeordneten Bremsträgerhorn 2 gegenüberliegenden Seite zur leichteren Entformung des Bremsträgers 1 offen. Hierzu trägt auch bei, dass jede Vertiefung 5 zur offenen Seite hin geringfügig schräg verläuft. Dabei geht die Schräge der Vertiefung 5 von einer Kehle 10 aus, in deren Bereich der Formteilungsgrat 8 verläuft.

Zwar sind in den Abbildungen die Vertiefungen 5 nur an der Innenseite einer Strebe 3 bzw. der beiden dieser zugeordneten Bremsträgerhörner 2 dargestellt, jedoch sind die Vertiefungen 5 selbstverständlich auch gegenüberliegend vorgesehen und zwar deckungsgleich oder in ihrer Höhe unterschiedlich.

## Patentansprüche

1. Durch Gießen, insbesondere im Gussverfahren hergestellter Bremsträger (1) für eine Scheibenbremse, mit einem Scheibenschacht (4) zur Aufnahme einer Bremsscheibe (9), wobei der Scheibenschacht (4) einen beim Gießen entstandenen Formteilungsgrat (8) aufweist, **dadurch gekennzeichnet, dass** der Formteilungsgrat (8) zumindest bereichsweise in seitliche Vertiefungen (5) ragt und dabei fluchtend oder zurückgesetzt zur angrenzenden Wandung des Scheibenschachtes (4) verläuft.

2. Bremsträger nach Anspruch 1, **dadurch gekennzeichnet, dass** die Vertiefungen (5) im Bereich der engsten Stellen des Scheibenschachtes (4) vorgesehen sind.

3. Bremsträger nach Anspruch 1 oder 2, **dadurch gekennzeichnet, dass** die Vertiefung (5) in einem Teilbereich der Wandung des Scheibenschachtes (4) vorgesehen ist, die bestimmt ist von der Form eines Bremsträgerhorns (2) sowie einer Strebe (3), die an das Bremsträgerhorn (2) angeformt ist.

4. Bremsträger nach einem der vorhergehenden Ansprüche, **dadurch gekennzeichnet, dass** die Vertiefung (5) auf der dem zugeordneten Bremsträgerhorn (2) gegenüberliegenden Seite offen ist.

5. Bremsträger nach einem der vorhergehenden Ansprüche, **dadurch gekennzeichnet, dass** die Vertiefung (5) zu der dem Bremsträgerhorn (2) abgewandten Seite hin geringfügig schräg verläuft, unter Verbreiterung des Scheibenschachtes (4) in diesem Bereich.

6. Bremsträger nach einem der vorhergehenden Ansprüche, **dadurch gekennzeichnet, dass** die Vertiefung (5) eine Kehle (10) aufweist, von dem die schräge Ausbildung ausgeht.

7. Bremsträger nach Anspruch 6, **dadurch gekennzeichnet, dass** der Formteilungsgrat (8) im Bereich der Kehle (10) verläuft.

## Claims

1. A brake carrier (1) produced by casting, in particular in a casting process, for a disc brake, comprising a disc shaft (4) to receive a brake disc (9), the disc shaft (4) having a parting-line fin originating during casting, **characterised in that** in certain regions at least the parting-line fin (8) projects into lateral recesses (5), running flush with or set back in relation to the adjacent wall of the disc shaft (4)

2. A brake carrier according to claim 1, **characterised in that** the recesses (5) are provided in the region of the narrowest parts of the disc shaft (4).

3. A brake carrier according to claim 1 or 2, **characterised in that** the recess (5) is provided in a part region of the wall of the disc shaft (4) that is determined by the shape of a brake carrier horn (2) and of a strut (3) that is formed to the brake carrier horn (2).

4. A brake carrier according to one of the preceding claims, **characterised in that** the recess (5) is open on the side opposite the corresponding brake carrier horn (2).

5. A brake carrier disc according to one of the preceding claims, **characterised in that** that the recess (5) runs towards the side facing away from the brake carrier horn (2) at a slight angle, thereby enlarging the disc shaft (4) in this region.

6. A brake carrier according to one of the preceding claims, **characterised in that** the recess (5) has a throat (10) from which the angled shaping starts.

7. A brake carrier according to claim 6, **characterised in that** the parting-line fin runs in the region of the throat.

## Revendications

1. Support (1) fabriqué par coulée, notamment par un procédé de coulée, d'un frein à disque, comprenant un puits (4) de disque de réception d'un disque (9) de frein, le puits (4) de disque ayant une bavure (8) de joint, créée à la coulée, **caractérisé en ce que** la bavure (8) de joint pénètre, au moins par endroit, dans des cavités (5) latérales et s'étend ainsi au ras ou en retrait de la paroi voisine du puits (4) de disque.

2. Support de frein suivant la revendication 1, **caractérisé en ce que** les cavités (5) sont prévues dans la région des endroits les plus étroits du puits (4) de disque.

3. Support de frein suivant la revendication 1 ou 2, **caractérisé en ce que** la cavité (5) est prévue dans une région partielle de la paroi du puits (4) de disque, qui est définie par la forme d'une corne (2) du support de frein, ainsi que d'une entretoise (3) venue de matière avec la corne (2) du support de frein.

4. Support de frein suivant l'une des revendications précédentes, **caractérisé en ce que** la cavité (5) est ouverte du côté opposé à la corne (2) du support de frein associée.

5. Support de frein suivant l'une des revendications précédentes, **caractérisé en ce que** la cavité (5) s'étend, en étant un peu inclinée vers le côté éloigné de la corne (2) du support de frein, avec élargissement du puits (4) de disque dans cette région.

6. Support de frein suivant l'une des revendications précédentes, **caractérisé en ce que** la cavité (5) a une rainure (10), dont part la partie inclinée.

7. Support de frein suivant la revendication 6, **caractérisé en ce que** la bavure (8) de joint s'étend dans la région de la rainure (10).
